# DEMANDE DE BREVET EUROPEEN

(11) **EP 1 088 707 A1**
(43) Date de publication de la demande: **04.04.2001**
(21) Numéro de dépôt: 00402633.2
(22) Date de dépôt: 22.09.2000
(51) Int. Cl.: B60R 19/20, B60R 19/40

(54) **Dispositif d'absorption de chocs pour véhicule automobile**

(30) Priorité: 29.09.1999 FR 9912128
(71) Demandeur: Renault, 92100 Boulogne Billancourt (FR)
(72) Inventeur: Alvez, Gilbert, 92370 Chaville (FR); Gomes, Pierre, 78180 Montigny Le Bretonneux (FR)

(57) **Abrégé**

L'invention propose un dispositif d'absorption de chocs (12) pour véhicule automobile (10) du type comportant une peau de bouclier transversal (18) destinée à recevoir l'impact d'un choc et qui est montée mobile en translation longitudinale sur la caisse du véhicule (10), et du type comportant des moyens d'absorption d'énergie (20) intercalés longitudinalement entre la caisse (14) du véhicule (10) et la peau de bouclier (18) comprenant au moins une enveloppe étanche munie d'un dispositif d'admission (22) de gaz permettant de la gonfler pour constituer un coussin d'absorption, et du type dont le gonflage ou le dégonflage des moyens d'absorption d'énergie (20) sont commandés lors de l'utilisation du véhicule (10) pour provoquer un déplacement de la peau de bouclier (18) entre une position active et une position de repos respectivement, caractérisé en ce que le gonflage des moyens d'absorption d'énergie (20) est commandé lorsque la vitesse du véhicule (10) devient supérieure à une première valeur de seuil déterminée, et en ce que le dégonflage des moyens d'absorption d'énergie (20) est commandé lorsque la vitesse du véhicule devient inférieure à une seconde valeur de seuil déterminée.

## Description

L'invention concerne un dispositif d'absorption de chocs pour véhicule automobile.

L'invention concerne plus particulièrement un dispositif d'absorption de chocs pour véhicule automobile du type comportant une peau de bouclier transversal destinée à recevoir l'impact d'un choc et qui est montée mobile en translation longitudinale sur la caisse du véhicule, et du type comportant des moyens d'absorption d'énergie intercalés longitudinalement entre la caisse du véhicule et la peau de bouclier comprenant au moins une enveloppe étanche munie d'un dispositif d'admission de gaz permettant de la gonfler pour constituer un coussin d'absorption.

La réglementation en vigueur impose des contraintes de sécurité importantes. Les véhicules doivent absorber de plus en plus d'énergie en cas de choc pour protéger les passagers du véhicule, mais aussi les piétons qui peuvent être victimes d'accidents.

De plus, des normes permettent d'évaluer le "niveau" de sécurité des véhicules. Il s'agit notamment des essais d'absorption de chocs du type "Danner". Ce test consiste à soumettre un véhicule à un choc frontal à une vitesse de 15 kilomètres par heure sur une surface d'impact correspondant à 40% de la surface du pare-chocs du véhicule. Les dégâts produits par le choc sont alors constatés. Plus les dégâts sont importants, plus les coûts d'assurance du véhicule sont élevés.

La quantité d'énergie absorbée par le véhicule dépend notamment des matériaux utilisés pour la réalisation de la caisse du véhicule ainsi que de la disposition et des dimensions de ladite caisse.

La longueur du capot est figée par des critères d'encombrement du véhicule, ce qui limite sa capacité d'absorption d'énergie sans dommages en cas de choc avant.

Le brevet américain US.4.061.385 propose d'équiper le véhicule d'un absorbeur de chocs constitué d'une chambre longitudinale contenant une enveloppe gonflée par un gaz sous pression.

Une des parois longitudinales de la chambre comporte un évidemment dans lequel un dispositif d'absorption d'énergie est monté coulissant transversalement par rapport à la chambre longitudinale. Le dispositif d'absorption d'énergie est constitué à l'avant par un élément dit "impacteur" qui est flexible et, à l'arrière, par un élément d'arrêt qui comporte une face avant et une face arrière. L'élément impacteur traverse l'évidemment. L'élément d'arrêt permet d'une part l'arrêt en translation du dispositif d'absorption vers l'extérieur de la chambre par contact de sa face avant sur la face arrière de la paroi dans laquelle l'évidemment est réalisé et, d'autre part, le contact entre la face arrière et l'enveloppe gonflée.

Lorsque l'élément impacteur du dispositif d'absorption est soumis à un choc, une partie de l'énergie est transmise à l'enveloppe gonflée, l'autre partie de l'énergie déforme légèrement les faces latérales de l'élément impacteur de façon à augmenter la résistance au glissement transversal du dispositif d'absorption dans l'évidemment de la chambre longitudinale.

Cet absorbeur de chocs est fixé à l'avant ou à l'arrière du véhicule. Il ne permet pas une absorption maximale des chocs et, de plus, l'élément impacteur dépasse de l'enveloppe dudit véhicule ce qui nuit à l'esthétique générale de ce dernier.

Dans le but d'apporter une solution à ces problèmes, et d'améliorer la sécurité des passagers du véhicule ainsi que celle des piétons, l'invention propose un dispositif d'absorption de chocs pour véhicule automobile du type vu précédemment caractérisé en ce que le gonflage ou le dégonflage des moyens d'absorption d'énergie sont commandés lors de l'utilisation du véhicule pour provoquer un déplacement de la peau de bouclier entre dans une position active et une position de repos respectivement.

Selon d'autres caractéristiques de l'invention :
- le gonflage des moyens d'absorption d'énergie est commandé lorsque la vitesse du véhicule devient supérieure à une première valeur de seuil déterminée, et en ce que le dégonflage des moyens d'absorption d'énergie est commandé lorsque que la vitesse du véhicule devient inférieure à une seconde valeur de seuil déterminée ;
- le gonflage des moyens d'absorption d'énergie est commandé lorsque le moteur du véhicule démarre, et en ce que le dégonflage des moyens d'absorption d'énergie est commandé lorsque le moteur du véhicule s'arrête ;
- le gaz qui permet de gonfler les moyens d'absorption d'énergie est de prélevé dans l'atmosphère ;
- le gaz qui permet de gonfler les moyens d'absorption d'énergie sont des gaz d'échappement du moteur du véhicule ;
- le dispositif d'absorption comprend des moyens de régulation de la pression du gaz qui comportent une soupape de régulation qui limite la pression dans les moyens d'absorption d'énergie à une valeur maximale déterminée ;
- des moyens de rappel sont disposés entre la caisse du véhicule et la peau de bouclier de façon à ramener et à maintenir la peau du bouclier en position de repos lorsque les moyens d'absorption d'énergie sont dégonflés ;
- le dispositif d'absorption comprend des moyens pour mettre le gaz sous pression de façon à gonfler les moyens d'absorption d'énergie et des moyens pour évacuer les gaz contenus dans les moyens d'absorption d'énergie de façon à les dégonfler ;
- la peau de bouclier est sensiblement alignée à la carrosserie adjacente lorsqu'elle est en position de repos.

D'autres caractéristiques et des avantages de l'invention apparaîtront à la lecture de la description détaillée qui suit pour la compréhension de laquelle on se reportera aux dessins annexés dans lesquels :
- la figure 1 représente de manière schématique le capot avant d'un véhicule automobile équipé d'un dispositif d'absorption de chocs selon l'invention qui est illustré en position de repos ;
- la figure 2 est une vue similaire à celle de la figure 1 sur laquelle le dispositif d'absorption de chocs est illustré en position active ;
- la figure 3 est une vue de détail et en coupe selon la ligne 3-3 de la figure 2 ;

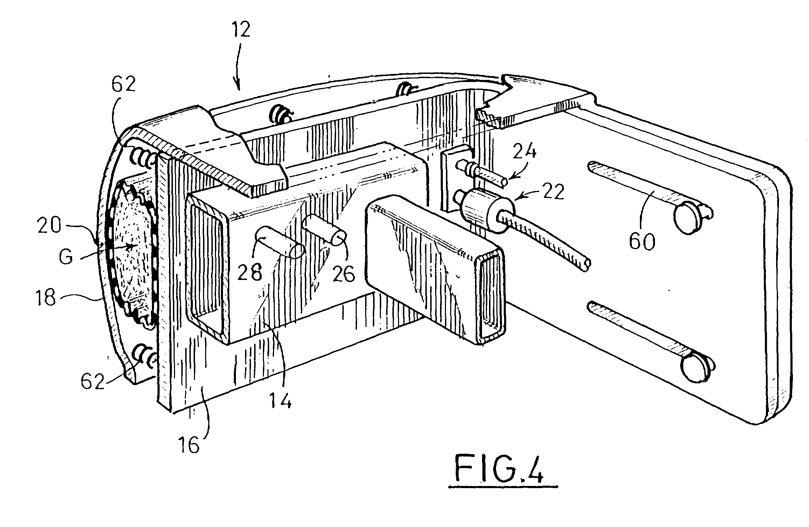

- la figure 4 est une vue en perspective et à plus grande échelle d'un détail du dispositif selon l'invention ;
- la figure 5 est une représentation schématique du circuit de commande du dispositif d'absorption de chocs selon un premier mode de réalisation de l'invention ; et
- la figure 6 est une vue similaire à celle de la figure 5 qui illustre un second mode de réalisation de l'invention.

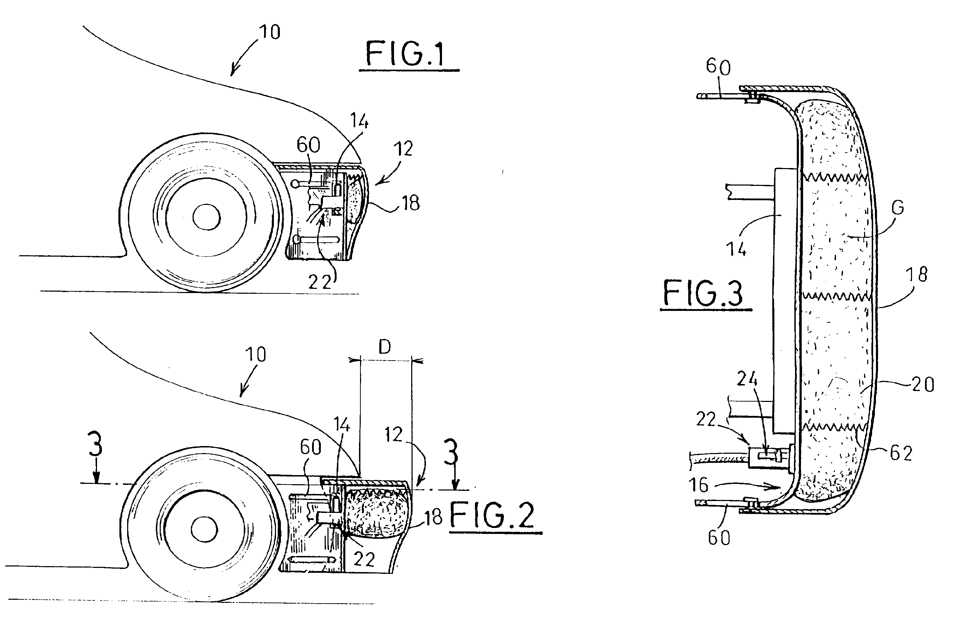

On a représenté sur les figures 1 et 2 la partie avant d'un véhicule automobile 10 équipé d'un dispositif d'absorption de chocs 12 selon un premier mode de réalisation.

Le dispositif d'absorption de chocs 12 est fixé ici sur une poutre transversale avant 14. Il comprend principalement une paroi arrière 16, une peau de bouclier transversal 18 et un absorbeur de chocs 20.

Ces trois éléments sont placés transversalement par rapport au déplacement longitudinal du véhicule.

L'absorbeur 20 est disposé entre la paroi arrière 16 et la peau du bouclier 18. Il est constitué d'une enveloppe étanche qui a un volume intérieur sensiblement égal à 0,05 m³ et qui est reliée à des moyens de gonflage 22, des moyens de dégonflage 24, des moyens de régulation 26 de sa pression interne ainsi que des moyens de vidange rapide 28.

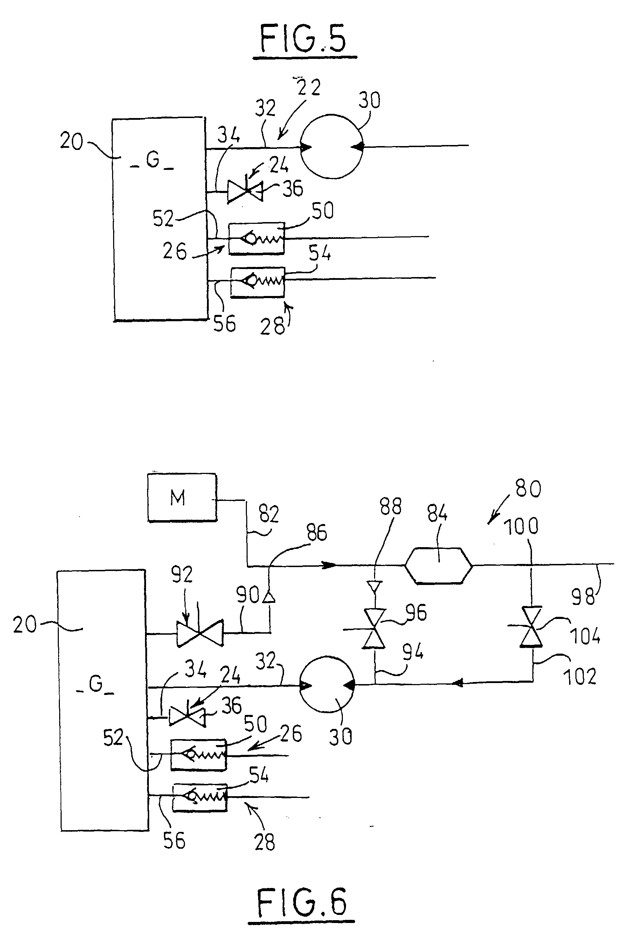

Selon un premier mode de réalisation illustré à la figure 5, les moyens de gonflage 22 consistent en une pompe 30 qui aspire un gaz G, notamment de l'air de l'atmosphère, et qui l'injecte dans l'absorbeur 20 par l'intermédiaire d'une conduite 32 jusqu'à ce que la pression P régnant à l'intérieur de l'enveloppe étanche soit égale à une pression P1.

Les moyens de dégonflage 24 comportent une conduite 34 dont une première extrémité communique avec l'intérieur de l'absorbeur 20 et dont une seconde extrémité est reliée à l'entrée d'une vanne 36 de vidange. L'ouverture et la fermeture de la vanne 36 sont commandées par des moyens non représentés.

La sortie de la vanne 36 communique directement avec l'atmosphère.

Les moyens de régulation 26 de la pression interne de l'absorbeur 20 comportent une soupape de régulation 50 dont l'entrée communique avec l'intérieur de l'absorbeur 20 par intermédiaire d'une conduite 52. La sortie de la soupape de régulation 50 communique directement avec l'atmosphère. La soupape de régulation 50 possède une pression de tarage P2, supérieure à P1, c'est-à-dire que lorsque la pression P devient supérieure à la pression P2, la soupape de régulation 50 permet le passage du gaz G entre son entrée et sa sortie de façon à faire diminuer la pression P.

Les moyens de vidange rapide 28 sont similaires à ceux des moyens de régulation 26. Une vanne de fuite 54, dont l'entrée est reliée par une conduite 56 à l'intérieur de l'absorbeur de chocs 20, possède une pression de tarage P3 légèrement supérieure à la pression P2. De plus, la vanne de fuite 54 permet la vidange quasi instantanée de l'absorbeur 20 en cas de choc. Elle doit donc permettre le passage de la quasi-totalité du gaz G qui se trouve dans l'absorbeur 20 en un temps très court, de l'ordre d'un dixième de seconde, son débit de passage est donc très important. Pour l'absorbeur 20 de 0,05 m³, la vanne de fuite 54 doit ainsi avoir un débit de 0,5 m³ par seconde.

Avantageusement, le dispositif d'absorption de chocs 12 comporte plusieurs moyens de vidange 28, cela permettant de diviser d'autant leur débit respectif de passage.

Selon une variante, l'absorbeur de chocs 20 est constitué de plusieurs enveloppes disposées côte à côte qui sont toutes reliées à des moyens de gonflage 22, de dégonflage 24, de régulation 26 et de vidange rapide 28. Ces moyens peuvent être communs aux diverses enveloppes.

La peau de bouclier 18 est globalement montée mobile en translation longitudinale par rapport à la paroi arrière 16. Des glissières 60 assurent par exemple le guidage en translation. De plus, des moyens de rappel 62, tels que des ressorts de traction, sont disposés entre la peau de bouclier 18 et la paroi arrière 16 de façon à exercer constamment un effort longitudinal qui est dirigé vers l'arrière du véhicule 10 et qui est destiné à rapprocher la peau de bouclier 18 de la paroi arrière 16 pour garder en contact la peau de bouclier 18 et l'absorbeur 20.

Un capteur de pression 64 est disposé à l'intérieur de l'absorbeur 20, il fournit une information représentative de la pression P qui règne dans l'enveloppe étanche.

Le fonctionnement du dispositif d'absorption de chocs 12 est le suivant.

Lorsque le moteur du véhicule 10 ne fonctionne pas la peau du bouclier 18 du dispositif d'absorption de chocs 12 est dans une position de repos. Conformément à la figure 1, la face avant de la peau de bouclier 18 est alors sensiblement alignée avec l'avant du capot du véhicule 10, ce qui ne modifie pas l'esthétique du véhicule 10

La mise en route du moteur du véhicule 10 provoque l'entraînement de la pompe 30. Du gaz sous pression est alors introduit par l'intermédiaire de la conduite 32 dans l'enveloppe étanche de l'absorbeur 20 qui se gonfle jusqu'à atteindre sa position dite position active. Conformément aux figures 2 et 3, la face avant de la peau de bouclier 18 est alors décalée longitudinalement vers l'avant par rapport à l'avant du capot du véhicule d'une distance D qui correspond à la distance d'absorption du dispositif 12 en cas de choc frontal du véhicule 10.

Selon une variante, une condition autre que la mise en route du moteur du véhicule 10 est prise en compte pour alimenter la pompe 30. Il s'agit notamment du dépassement d'une faible vitesse par le véhicule 10.

Il peut aussi s'agir de la détection d'un obstacle situé à une certaine distance de la peau de bouclier 18 du véhicule. Selon cette variante, il est nécessaire que le temps de gonflage de l'enveloppe étanche de l'absorbeur de chocs 20 soit inférieur au temps mis par le véhicule pour parcourir la distance qui sépare la position de la peau de bouclier 18, au moment de la détection de l'obstacle, et l'obstacle.

La pompe 30 fonctionne jusqu'à ce que la pression P, à l'intérieur de l'absorbeur 20, soit égale à la pression P1.

Ensuite, la pression P est régulée à une pression sensiblement égale à la pression P1.

Lorsque la pression P devient légèrement inférieure à la pression P1, la pompe 30 est mise route de façon à réintroduire du gaz G qui provient de l'atmosphère dans l'absorbeur 20 pour élever la pression P jusqu'à la pression P1.

Lorsque, pour diverses raisons telles que l'accélération du véhicule 10, la pression P devient supérieure à la pression P2 la soupape de régulation 52 s'ouvre de façon que la pression P reprenne une valeur inférieure à la pression P2.

Lorsque le contact du véhicule est coupé, la régulation de la pression P est arrêtée. De plus, la vanne 36 est ouverte de façon que le gaz G situé dans l'absorbeur de chocs 20 s'échappe vers l'atmosphère ou le catalyseur d'échappement, notamment sous l'action des ressorts 62.

Selon une variante, l'arrêt de la régulation de la pression P, ainsi que l'ouverture de la vanne 36 sont opérés lorsque la vitesse du véhicule devient inférieure à une vitesse déterminée.

Les moyens de rappel 62 qui exercent un effort de traction sur la peau de bouclier 18 dans la direction de la paroi arrière 16, compriment l'absorbeur de chocs 20 de façon à le vider pour que la peau de bouclier 18 revienne en position de repos.

Lorsque l'absorbeur 20 est gonflé et lors d'un choc, notamment d'un choc avec un piéton, la peau de bouclier 18 comprime vivement l'absorbeur 20 et la pression P augmente alors fortement et devient supérieure à la pression P3 de la vanne de fuite 54. Le gaz G est alors rapidement évacué de l'enveloppe étanche. La compression du gaz G et son évacuation de l'absorbeur 20 consomme l'énergie résultant du choc.

Avantageusement, la pression P est égale à 7 bars lors d'un choc à une vitesse inférieure à 40 kilomètres par heure avec un piéton. Dans ce cas, le dispositif d'absorption de chocs 12 selon l'invention permet de limiter fortement les risques de fracture d'un membre du piéton, car l'énergie du choc est absorbée sous une contrainte inférieure à la contrainte limite de rupture des membres intérieurs du piéton.

Lors d'un choc à une vitesse voisine de 15 km/h, le dispositif d'absorption de chocs 12 permet d'une part de subir le test de type "Danner" avec une surface d'impact correspondant à 40% de la surface du pare-chocs sans aucun dégât sur le véhicule 10, c'est-à-dire que la contrainte résultante de la différence entre l'énergie du choc et l'énergie absorbée par le dispositif d'absorption de chocs 12 est inférieure à la contrainte de déformation plastique des matériaux qui constituent la caisse du véhicule. D'autre part, il permet d'annuler ou de retarder le déclenchement des dispositifs de coussins gonflables du véhicule.

En effet, de tels dispositifs de sécurité sont conçus pour être mis en oeuvre lorsqu'un capteur d'accélération situé à proximité de l'habitacle du véhicule détecte une décélération supérieure à un seuil déterminé qui est atteint généralement lors d'un choc à une vitesse du véhicule voisine de 15 kilomètres par heure. La partie avant des véhicules étant de plus en plus courte, notamment sur les véhicules du type monospace, la quantité d'énergie transmise à l'habitacle est plus importante. Cela a pour conséquence un déclenchement des dispositifs de sécurité à des vitesses faibles, parfois inférieures à 15 kilomètres par heure, ne mettant pas en jeu la sécurité des passagers.

Un tel déclenchement doit être évité car le déploiement des dispositifs de sécurité a plusieurs conséquences. D'une part, il gêne la visibilité du conducteur qui, à de faibles vitesses, est toujours maître de son véhicule et, d'autre part, il entraîne un coût important lié au conditionnement et à la remise en service des dispositifs de sécurité.

Le dispositif d'absorption de chocs 12 selon l'invention, permet de supprimer ces inconvénients en absorbant une quantité d'énergie suffisante pour que le déclenchement des dispositifs de sécurité ne se produise que pour un choc à une vitesse par exemple supérieure à 20 kilomètres par heure.

Lors d'un choc supérieur à 20 kilomètres par heure, le dispositif d'absorption 12 permet de diminuer l'intensité de ce choc. Le capteur d'accélération situé à proximité de l'habitacle est alors exposé à une décélération plus faible et les autres éléments du véhicule 10 sont soumis à des contraintes moins importantes.

Selon un second mode de réalisation, le dispositif d'absorption de chocs 12 permet, en plus des avantages déjà décrits, de stocker, puis de vidanger une certaine quantité de gaz d'échappement G lorsque les conditions de dépollution sont défavorables et favorables respectivement.

Selon le second mode de réalisation, le dispositif d'absorption de chocs 12 comporte les mêmes composants que dans le premier mode de réalisation auquel est ajouté un système de circulation 80 des gaz d'échappement G.

La figure 6 illustre le dispositif d'absorption de chocs 12 selon ce second mode de réalisation.

Le système de circulation 80 des gaz d'échappement comprend une conduite 82 qui est reliée à l'une de ses extrémités aux sorties d'échappement dites "chapelles d'échappement" du moteur M du véhicule 10 et, à l'autre extrémité, à un dispositif de dépollution 84 tel qu'un filtre à particules et un piège à oxydes d'azote. Les gaz d'échappement G circulent dans la conduite 82 du moteur M vers le dispositif de dépollution 84.

La conduite 82 comporte un point de raccordement 86 et un point de dérivation amont 88.

Une conduite 90 dans laquelle est interposée une vanne 92 qui est commandée par des moyens non représentés relie l'intérieur de l'absorbeur de chocs 20 au point de raccordement 86.

Une conduite 94, dans laquelle est interposée une vanne 96 qui est commandée par des moyens non représentés, relie quant à elle l'entrée de la pompe 30 au point de dérivation amont 88.

Une conduite d'échappement 98 évacue les gaz d'échappement G du dispositif de dépollution 80 vers l'atmosphère. Elle comporte un point de dérivation aval 100 relié à l'une des extrémités d'une conduite 102 qui comporte une vanne 104 qui est commandée par des moyens non représentés. L'autre extrémité de la conduite 102 est branchée sur l'entrée de la pompe 30.

Lorsque la vanne 104 est ouverte, la pompe 30 aspire les gaz d'échappement G contenus dans la conduite 102. Lorsque la vanne 104 est fermée la pompe 30 aspire les gaz G conformément au premier mode de réalisation, en lieu et place de l'air atmosphérique.

Le fonctionnement du système de circulation 80 est le suivant.

Pour que le dispositif de dépollution 84 soit efficace il faut que certaines conditions de traitement, notamment de température et de composition des gaz d'échappement G soient remplies. Or, dans certaines phases de fonctionnement du moteur M, notamment lors du démarrage, ces conditions ne sont pas remplies. Des moyens de détection, non représentés, qui sont associés au dispositif de dépollution 84 fournissent une information qui est représentative des conditions de dépollution.

Le dispositif d'absorption de chocs 12 selon le second mode de réalisation permet de stocker les gaz d'échappement G dans l'absorbeur 20 pendant ces phases de fonctionnement du moteur M et de les vidanger lorsque les conditions de traitement sont remplies de façon à assurer une bonne dépollution de ces gaz.

Lors du démarrage du moteur M, les vannes 92, 96 et 104 sont fermées. Lorsque les conditions de traitement des gaz d'échappement G ne sont pas remplies, la vanne 96 est ouverte de façon que la pompe 30 aspire les gaz d'échappement G non dépollués issus de la conduite 82 de sortie du moteur M.

Si l'enveloppe étanche de l'absorbeur de chocs 20 est vide, elle est alors remplie des gaz d'échappement G non dépollués.

Si l'enveloppe étanche de l'absorbeur 20 est pleine des gaz d'échappement G dépollués, ces derniers sont concomitamment évacués par la conduite 34 et la vanne 36. La coordination entre la pompe 30 et les vannes 96 et 36 permet la régulation de la pression P régnant à l'intérieur de l'absorbeur de chocs 20 autour d'une valeur sensiblement égale à la pression P1.

Le remplissage de l'absorbeur 20 se poursuit jusqu'à ce qu'il soit plein, ou jusqu'à ce que les moyens de détection indiquent des conditions favorables à la dépollution des gaz d'échappement G, la vanne 96 est alors fermée.

Ensuite, lorsque les moyens de détection indiquent des conditions favorables à la dépollution des gaz d'échappement G contenus dans l'enveloppe de l'absorbeur 20, les vannes 92 et 104 sont progressivement ouvertes de façon que les gaz non dépollués stockés dans l'enveloppe étanche soient réintroduits au point de raccordement 86, dans la conduite de sortie 82 en amont du dispositif de dépollution 84 et de façon que ces gaz G soient concomitamment remplacés par des gaz d'échappement dépollués provenant de la conduite d'échappement 98. La coordination entre la pompe 30 et les vannes 92 et 104 permet la régulation de la pression P régnant à l'intérieur de l'absorbeur de chocs 20 autour d'une valeur sensiblement égale à la pression P1.

Lorsque les gaz contenus dans l'enveloppe étanche de l'absorbeur de chocs 20 sont dépollués et que les conditions de traitement sont remplies, les vannes 92, 96 et 104 sont fermées. Le dispositif d'absorption de chocs 12 fonctionne alors de la même façon que le premier mode de réalisation.

Le deuxième mode de réalisation permet donc de limiter fortement les émissions des gaz d'échappement G non ou mal dépollués.

## Revendications

1. Dispositif d'absorption de chocs (12) pour véhicule automobile (10) du type comportant une peau de bouclier transversal (18) destinée à recevoir l'impact d'un choc et qui est montée mobile en translation longitudinale sur la caisse du véhicule (10), du type comportant des moyens d'absorption d'énergie (20) intercalés longitudinalement entre la caisse (14) du véhicule (10) et la peau de bouclier (18) comprenant au moins une enveloppe étanche munie d'un dispositif d'admission (22) de gaz (G) permettant de la gonfler pour constituer un coussin d'absorption, et du type dont le gonflage ou le dégonflage des moyens d'absorption d'énergie (20) sont commandés lors de l'utilisation du véhicule (10) pour provoquer un déplacement de la peau de bouclier (18) entre une position active et une position de repos respectivement, caractérisé en ce que le gonflage des moyens d'absorption d'énergie (20) est commandé lorsque la vitesse du véhicule (10) devient supérieure à une première valeur de seuil déterminée, et en ce que le dégonflage des moyens d'absorption d'énergie (20) est commandé lorsque la vitesse du véhicule devient inférieure à une seconde valeur de seuil déterminée.

2. Dispositif d'absorption selon la revendication précédente, caractérisé en ce que le gaz (G) qui permet de gonfler les moyens d'absorption d'énergie (20) est prélevé dans l'atmosphère.

3. Dispositif d'absorption selon la revendication 1, caractérisé en ce que le gaz (G) qui permet de gonfler les moyens d'absorption d'énergie (20) sont des gaz d'échappement du moteur du véhicule (10).

4. Dispositif d'absorption selon l'une quelconque des revendications 1 à 3, caractérisé en ce qu'il comprend des moyens de régulation (26) de la pression (P) du gaz (G) qui comportent une soupape de régulation (50) qui limite la pression dans les moyens d'absorption d'énergie (20) à une valeur maximale déterminée (P2).

5. Dispositif d'absorption selon l'une quelconque des revendications 1 à 4, caractérisé en ce que des moyens de rappel (62) sont disposés entre la caisse du véhicule (10) et la peau de bouclier (18) de façon à ramener et à maintenir la peau du bouclier (18) en position de repos lorsque les moyens d'absorption d'énergie (20) sont dégonflés.

6. Dispositif d'absorption selon l'une quelconque des revendications 1 à 5, caractérisé en ce qu'il comprend des moyens (30) pour mettre le gaz sous pression de façon à gonfler les moyens d'absorption d'énergie (20) et des moyens (24) pour évacuer les gaz contenus dans les moyens d'absorption d'énergie (20) de façon à les dégonfler.

7. Dispositif d'absorption selon l'une quelconque des revendications précédentes, caractérisé en ce que la peau de bouclier (18) est sensiblement alignée à la carrosserie adjacente lorsqu'elle est en position de repos.
